# EUROPÄISCHE PATENTSCHRIFT

(11) **EP 0 426 016 B1**
(45) Veröffentlichungstag und Bekanntmachung des Hinweises auf die Patenterteilung: **28.06.1995**
(21) Anmeldenummer: 90120532.8
(22) Anmeldetag: 26.10.1990
(51) Int. Cl.: B60P 1/44

(54) **Vorrichtung zum Bewegen einer Ladebordwand**
Tail-gate control device
Dispositif pour commander un hayon

(30) Priorität: 02.11.1989 DE 3936340
(43) Veröffentlichungstag der Anmeldung: 08.05.1991
(73) Patentinhaber: Croon & Lucke Maschinenfabrik GmbH, D-88512 Mengen (DE)
(72) Erfinder:
(74) Vertreter: Weiss, Peter, Dr. rer.nat.

(56) Entgegenhaltungen:
- EP-A- 0 031 000
- DE-A- 2 051 286
- FR-A- 2 207 040
- FR-A- 2 257 462
- US-A- 2 792 135

## Beschreibung

Die Erfindung betrifft eine Vorrichtung zum Bewegen einer Ladebordwand od. dgl. schwenkbaren Körper an beispielsweise einer Ladeplattform eines Fahrzeuges, wobei die Ladebordwand mit einem Antrieb über Streben verbunden ist, welche einerseits getrennte Anlenkpunkte mit der Ladebordwand aufweisen und andererseits mit um eine Längsachse drehenden Anschlußprofilen des Antriebes verbunden sind.

Bekanntermaßen werden die heute bekannten Ladebordwände durch aufwendige hydraulische Antriebe bewegt. Im wesentlichen muß eine Ladebordwand drei Bewegungen vollführen. Einmal handelt es sich hierbei um eine Öffnungsbewegung von einer senkrechten Ladebordwandstellung in eine waagrechte Stellung. Darauf folgt eine Hubbewegung nach unten bis zur Entladefläche, wobei die Ladebordwand in waagrechter Stellung verbleibt.

Hierbei wird die Ladebordwand durch eine kurze Schwenkbewegung weiter so nach unten gesenkt, daß sie beidseitig auf der Entladefläche aufliegt. Ebenso muß die Ladebordwand auch die umgekehrten Bewegungen vollziehen können.

Zum Vollzug dieser Bewegungen sind, beispielsweise entsprechend der FR-A 2 257 462, aufwendige Hydraulikaggregate entwickelt worden, wobei jeweils beidseitig zwei Hydraulikstempel die Ladebordwand angreifen. Eine Zylinder-Kolben-Einheit übernimmt dabei die Schwenkbewegung der Ladebordwand, während die andere Zylinder-Kolben-Einheit das Absenken bewirkt. Diese Aggregate sind äußerst voluminös und sehr schwer. Zudem werden die vier Hydraulikzylinder von einem Zentralaggregat mit Hydraulikflüssigkeit versorgt, so daß eine Vielzahl von Schlauchleitungen notwendigt ist. Diese Schlauchleitungen unterliegen häufig der Gefahr von Beschädigungen, da sie in der Regel nach unten heraushängen. So werden sie häufig abgefahren.

Der Erfinder hat sich zum Ziel gesetzt, eine Vorrichtung der o.g. Art zu entwickeln, bei der erhebliches Volumen und Gewicht eingespart und die gesamte Bewegung wesentlich vereinfacht ist. Ferner sollen alle zusätzlichen Schläuche od. dgl. Verbindungselemente entfallen.

Zur Lösung dieser Aufgabe führt, daß die Anschlußprofile für die einen Streben mit einem äußeren Rohr und die Anschlußprofile für die anderen Streben mit einem inneren Rohr verbunden sind, wobei beide Rohre ineinander um eine Längsachse drehen.

Diese Streben sind, wie bekannt, parallelogrammartig zueinander angeordnet, können jedoch getrennt voneinander bewegt werden. Damit entfallen die einzelnen Hydraulikzylinder und somit auch die entsprechenden Anschlußschläuche. Eine Strebe dient zum Schwenken und die andere Strebe zum Absenken bzw. Anheben der Ladebordwand. Wegen der Kraftverteilung dürfte es notwendig sein, für den Absenk- bzw. Anhebevorgang eine zusätzliche Stützstrebe vorzusehen. Diese Stützstrebe besitzt im vorliegenden Ausführungsbeispiel einen gemeinsamen Anlenkpunkt mit der ihr zugeordneten Strebe an der Ladebordwand, andererseits ist sie jedoch an dem Antrieb um 180° um die Längsachse gedreht versetzt angekoppelt.

Selbstverständlich dürfe es ratsam sein, entsprechende Strebenpaare bzw. Strebenkombinationen beidseits der Ladebordwand vorzusehen.

Ein Vorteil der Erfindung liegt darin, daß der Antrieb nunmehr getrennt von den Streben geliefert werden kann. Insoweit handelt es sich nicht mehr um ein kompaktes, voluminöses Antriebsaggregat, sondern um Einzelteile, welche erst an Ort und Stelle zusammengebaut werden.

Besonderes Augenmerk ist bei der vorliegenden Erfindung auf den Antrieb zu richten. Hierbei hat der Erfinder die beiden ineinanderliegenden Rohre entwickelt, welche um die o.g. Längsachse drehen. Diese Längsachse verläuft im übrigen parallel zur hinteren Kante der Ladebordwand, während die Streben in einer Ebene etwa senkrecht zu dieser Längsachse angeordnet sind.

Im vorliegenden Ausführungsbeispiel umkreisen die Anschlußprofile diese Längsachse, wobei sie auf den jeweiligen Rohren festgelegt sind. So ist vorgesehen, daß mit dem äußeren Rohr das eine oder beide Anschlußprofil/e für die Strebe zum Absenken und Anheben der Ladebordwand bzw. für die Stützstrebe verbunden sind, während die die Schwenkbewegung der Ladebordwand bewirkende Strebe einen Anschluß an das innere Rohr aufweist. Selbstverständlich liegt hier auch ein Austausch im Rahmen des Erfindungsgedankens.

Wesentlicher Teil des vorliegenden Erfindungsgedankens ist, daß beiden Rohren nur ein Antriebsorgan zugeordnet ist, welches die Drehung der Rohre und damit die Drehung der Anschlußprofile um die Längsachse des Antriebes bewirkt. Bei einer Ladebordwand folgt in der Regel auf den Schwenkvorgang der Absenk- bzw. Anhebevorgang und sodann wiederum eine Schwenkbewegung. Insofern ist die Drehung der beiden Rohre zueinander so ausgelegt, daß das eine Rohr stillsteht, wenn das andere Rohr sich in Drehung befindet. Sollte aber ein Wunsch nach kombinierter Bewegung geäußert werden, so ist auch diese kombinierte Bewegung vom vorliegenden Erfindungsgedanken umfaßt, denn beide Rohre könnten auch miteinander bewegt werden.

Um die entsprechende Bewegung der Rohre, d. h. deren Drehung um die Längsachse zu steuern, sind Kulissenschlitze in den Rohren vorgesehen, welche einen bestimmten Verlauf aufweisen. Diese Kulissenschlitze sind im vorliegenden Ausführungsbeispiel beide von einem Fübrungselement durchsetzt, wobei selbstverständlich auch Führungselemente für jeden einzelnen Kulissenschlitz möglich sein könnten.

Die Abstimmung der Drehung der Rohre ist jedoch durch die gemeinsame Führung mittels eines Führungselementes erleichtert.

Dieses Führungselement besteht aus einem bolzenförmigen Gleitkörper, welcher von der Kolbenstange eines Hubzylinders angegriffen ist und, wie oben gesagt, die Kulissenschlitze durchsetzt. Hierdurch wird die gesamte Bewegung der Ladebordwand, sei es das Schwenken oder Absenken bzw. Anheben durch einen einzigen Antrieb ermöglicht, so daß die gesamte Hydraulik wesentlich vereinfacht und kostengünstiger herzustellen ist. Nebenbei sei bemerkt, daß der hydraulische Antrieb nur beispielsweise gewählt wird. Im Rahmen der Erfindung liegt selbstverständlich auch ein pneumatischer, elektrischer oder sogar, falls ausreichend, ein mechanischer Antrieb.

Der Einfachheit halber und um Platz zu sparen, befindet sich der Hubzylinder und die Kolbenstange innerhalb des inneren Rohres entlang der Längsachse. Somit macht die Kolbenstange nur einen einzigen Hub, wodurch die Bewegung der Ladebordwand ermöglicht wird.

Das Führungselement soll nach dem Durchsetzen der Kulissenschlitze in einer oberen und unteren Führungsrinne geführt sein. Obere und untere Führungsrinne verlaufen parallel zur Längsachse, so daß ein Kippen des Führungselementes nicht möglich ist.

Des weiteren sind dem bolzenförmigen Führungselement beidseits Drehkappen aufgesetzt, welche in entsprechenden Nadellagern drehen. Bei ihrem Gleiten durch die Führungsrinnen bzw. Kulissenschlitze rollen diese Drehkappen entsprechende Rinnenwände bzw. Kulissenwände ab.

Im übrigen durchsetzt das Führungselement mit einer Mittelachse senkrecht zur Längsachse einen Schubkolben, der wiederum mit der Kolbenstange verbunden ist. Dadurch wird dem Führungselement jede Möglichkeit genommen, unter Druck nach irgendeiner Seite auszuweichen. Wird das Führungselement entlang der Längsachse durch den Hydraulikantrieb bewegt, so müssen zwangsläufig die Rohre durch Drehbewegung der Bewegung des Führungselementes folgen.

Im vorliegenden Ausführungsbeispiel soll die Ladebordwand zwei Schwenkbewegungen und eine Absenk- bzw. Anhebebewegung durchführen. Dementsprechend sind auch die Kulissenschlitze ausgebildet. Beispielsweise weist der Kulissenschlitz des äußeren Rohres, welcher lediglich das Anheben bzw. Absenken bewirkt, einen mittleren, schräg zur Längsachse verlaufenden Teil auf der Mantelfläche des äußeren Rohres auf, an den sich beidseits ein parallel zur Längsachse verlaufender Teil anschließt. D. h., daß durch den anderen Kulissenschlitz zuerst eine Schwenkbewegung der Ladebordwand erfolgen kann, bevor der eben besprochene Kulissenschlitz das Absenken bzw. Anheben bewirkt.

Korrespondierend dazu weist nun der Kulissenschlitz im inneren Rohr einen mittleren, parallel zur Längsachse verlaufenden Bereich auf, an den sich jeweils ein schräg verlaufender Bereich anschließt. Innerhalb des schräg verlaufenden Bereiches erfolgt das Schwenken der Ladebordwand.

Da den Kulissenschlitzen wesentliche Bedeutung zukommt, werden auch an ihre Verschleißfestigkeit hohe Anforderungen zu stellen sein. Aus diesem Grunde bietet sich an, im Bereich dieser Kulissenschlitze die inneren und äußeren Rohre aus Guß, beispielsweise aus Stahl, herzustellen. Guß läßt auch das Ausformen von aufsteigenden Kulissenwandungen zu, an denen sich die Drehkappe des Führungselementes besser abrollen kann. Werden diese Bereiche des inneren und äußeren Rohres aus Guß hergestellt, so sollten dies Gußhalbschalen sein, die dann im Gehäuseantrieb miteinander verschweißt werden. Beidseits an diesen mittleren Bereich des inneren und äußeren Rohres können sich übliche stranggepreßte Rohrprofile beispielsweise aus Aluminium anschließen, welche billiger erhältlich sind.

Es versteht sich von selbst, daß die Rohre zum Drehen genügend gelagert sein müssen. Aus diesem Grunde sind die Rohre von einem Gehäuse umfangen, welches wiederum ausreichende Ausnehmungen bzw. Schlitze für die Anschlußprofile aufweist, wobei die Anschlußprofile diese Schlitze bei Drehbewegung der Rohre durchfahren.

Der Lagerung ist vor allem auf der einen Seite des Antriebes vermehrte Beachtung zu schenken, welche einer erhöhten Drucklast unterliegt. Dies geschieht beim Anheben der Ladebordwand, da hier das Führungselement erhebliche Druckkräfte auf die Kulissenschlitze und damit auf die Rohre aufbringt.

Hier sollte eine Lagerung der Rohre über entsprechende Drucklager erfolgen. Beim Absenken der Ladebordwand bedarf es dagegen kaum einer Antriebsleistung und damit eines Auffangens von Druckkräften, da hier allein durch das Gewicht der Ladebordwand das Führungselement versuchen wird, den Kulissenschlitzen zu folgen. Deshalb genügen auf dieser gegenüberliegenden Seite angeordnete Kunststofflager.

Der gesamte Antrieb kann, wie gesagt, sehr kompakt gebaut sein, wobei bevorzugt in einer Kammer hinter den Rohren das entsprechende Hydraulikaggregat für den Hubzylinder vorgesehen ist. Dieser Antrieb wird dann über entsprechende Anschlußwinkel bzw. Befestigungsflansche an der Ladeplattform festgelegt, so daß nur noch eine Verbindung des Antriebes mit der Ladebordwand über die mitgelieferten Streben erfolgen muß.

Sollt eine faltbare Ladebordwand Verwendung finden, so wird vom vorliegenden Erfindungsgedanken selbstverständlich auch eine Kulissenschlitzausführung umfaßt, welche dieses Zusammen- bzw. Auseinanderfalten der Ladebordwand ermöglicht. Ferner ist auch ohne weiteres die Anordnung eines dritten Rohres möglich, durch welches bestimmte Bewegungen der Ladebordwand zusätzlich durchgeführt werden können. Hier soll der vorliegenden Erfindung keine Grenze gesetzt sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1: eine schematische Seitenansicht der Bewegung einer Ladebordwand in Gebrauchslage;
- Fig. 2: einen Längsschnitt durch einen erfindungsgemäßen Antrieb der Ladebordwand in Figur 1;
- Fig. 3: einen vergrößert dargestellten Querschnitt durch den Antrieb gemäß Figur 2 entlang Linie III-III;
- Fig. 4: eine Draufsicht auf erfindungsgemäße abgerollte Kulissenführungen.

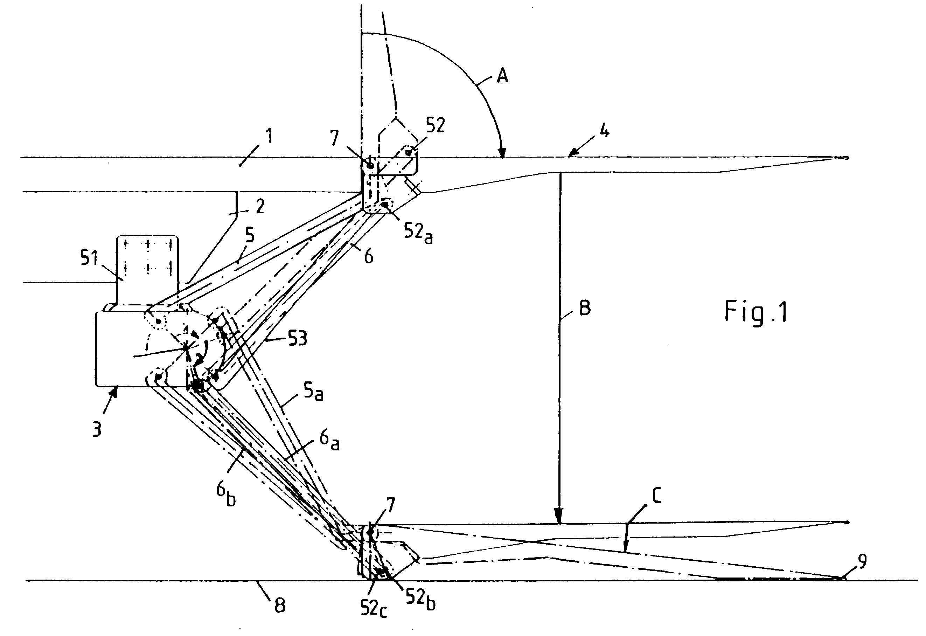

Gemäß Figur 1 ist an der Unterseite einer Ladeplattform 1 eines entsprechenden Lastkraftwagens an einem Befestigungsflansch 2 ein Antrieb 3 für eine Ladebordwand 4 dargestellt. Diese Ladebordwand 4 ist über Streben 5 und 6 so mit dem Antrieb 3 verbunden, daß durch Relativbewegung der Streben 5 und 6 zueinander im wesentlichen drei Bewegungsabläufe der Ladebordwand 4 möglich sind. Mit A ist die Bewegung der Ladebordwand 4 um eine Drehachse 7 um etwa 90° gekennzeichnet, wodurch die Ladebordwand 4 von einer etwa senkrechten, strichpunktiert dargestellten Stellung (Schließstellung) in eine etwa waagerechte Lage verbracht wird, in welcher zu entladende Güter auf die Ladebordwand gefahren bzw. gestellt werden können.

Danach erfolgt eine Hubbewegung B, mit welcher die Ladebordwand auf eine Entladefläche 8, beispielsweise den Erdboden, abgesenkt wird. Hierbei bleibt die Ladebordwand 4 in der oben genannten waagerechten Lage.

Durch eine weitere geringfügige Drehung um den Drehpunkt 7 durch die Drehbewegung C erfolgt ein Abkippen der Ladebordwand 4 in eine strichpunktiert dargestellte Stellung, in welcher eine Spitze 9 bzw. eine durch die Spitze 9 gebildete Randkante der Einladefläche 8 aufliegt und so ein müheloses Entladen der abgesenkten Güter erfolgen kann.

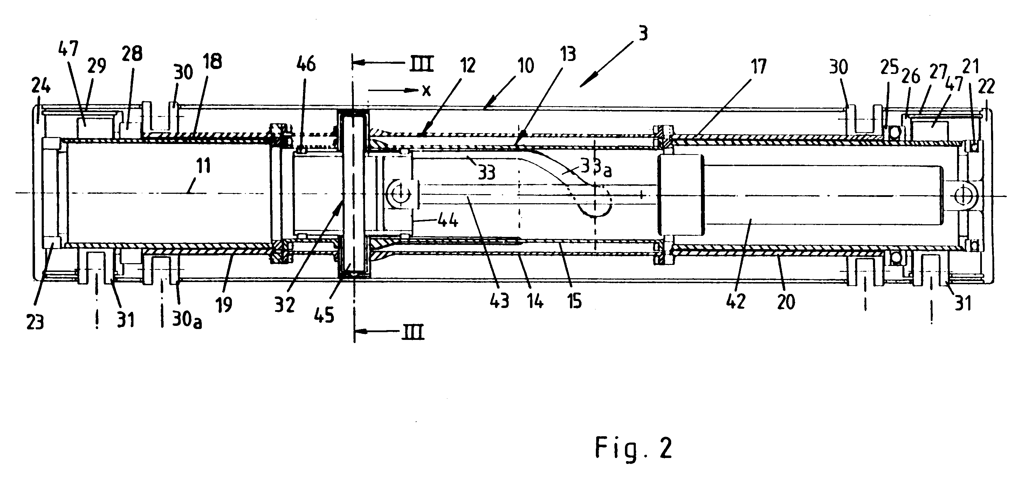

Diese drei Bewegungen A, B und C der Ladebordwand 4 werden von dem Antrieb 3 durchgeführt. Dieser weist gemäß Figur 2 ein Gehäuse 10 auf, in welchem entlang einer Längsachse 11 zwei Rohre 12 und 13 ineinander drehend geführt sind. Beide Rohre bestehen aus jeweils drei Rohrabschnitten, welche aus unterschiedlichem Material und gemäß unterschiedlichen Herstellungsverfahren geformt sein können. Die hierzu dienenden Angaben sind nur beispielhaft.

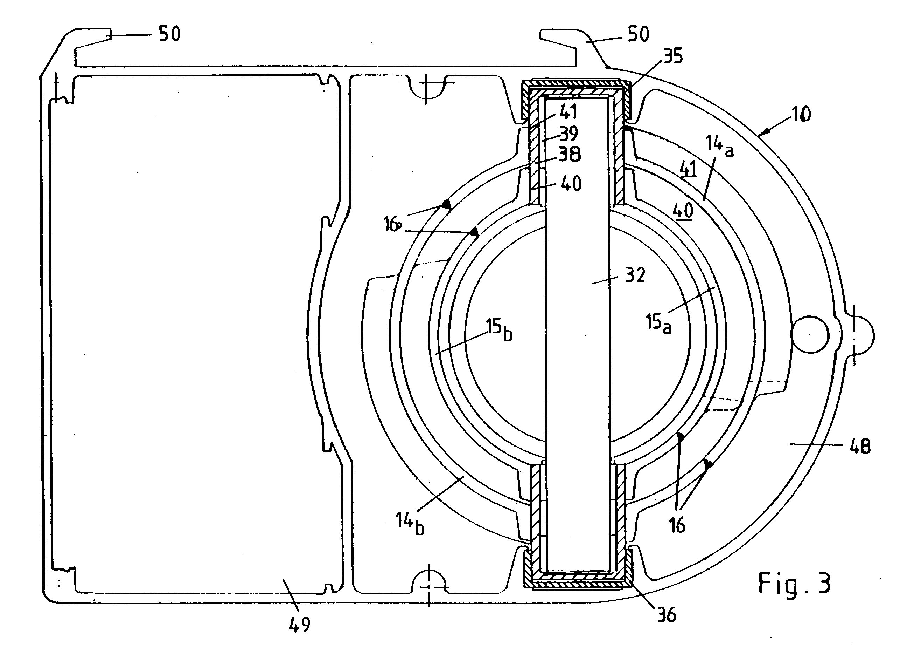

Beispielsweise können beide Rohre jeweils ein Mittelstück aufweisen, welches aus Halbschalen 14 bzw. 15 geformt ist. Diese Halbschalen sind dann beispielsweise Gußschalen und aus Stahl hergestellt. Dies wird in Figur 3 deutlicher gezeigt, wo die jeweiligen Halbschalen mit 14a und 14b sowie 15a und 15b gekennzeichnet und über entsprechende Schweißnähte 16 miteinander verbunden sind.

Jedem Mittelstück sind dann beidseits Rohrstücke 17 und 18 sowie 19 und 20 angeflanscht. Diese Rohrstücke können beispielsweise aus einem Aluminiumstrang gepreßt sein.

Beide Rohre 12 und 13 sind voneinander beabstandet, wobei im vorliegenden Ausführungsbeispiel die Abstände der Halbschalen 14 bzw. 15 und der Rohrstücke 17, 18 bzw. 19, 20 unterschiedlich gewählt sind. Dies hat jedoch auf den erfinderischen Gedanken keinen Einfluß. In jedem Fall muß der Abstand so gewählt werden, daß das innere Rohr 13 in dem äußeren Rohr 12 bzw. das äußere Rohr 12 um das innere Rohr 13 ohne Schwierigkeiten drehen kann.

Zur Erleichterung der Drehung stützt sich das innere Rohr 13 nach rechts gegen ein Drucklager 21 ab, welches von einem Deckel 22 des Gehäuses 10 gehalten ist. Andernends genügt ein Kunststofflager 23, über welches sich ebenfalls das innere Rohr 13 gegen den anderen Deckel 24 abstützt.

Das äußere Rohr 12 ist wiederum rechtsseitig über ein Drucklager 25 und einen Laufring 26 mit einem Gehäusering 27 verbunden. Andernends genügt auch hierfür wiederum ein Kunststofflager 28, welches seine Abstützung an einem Gehäusering 29 erfährt.

In diesen Lagern drehen äußeres Rohr 12 bzw. inneres Rohr 13 um die Drehachse 11, wobei sie entsprechende Anschlußprofile 30 und 31 mitnehmen. Diese Anschlußprofile 10 und 31 sind stirnwärtig auf beiden Seiten des Antriebes 3 übereinstimmend angeordnet und dienen zum Anschließen der oben genannten Streben 5 bzw. 6.

Dabei liegt an dem Anschlußprofil 30 des äußeren Rohres 12 die Strebe 5 und an dem Anschlußprofil 31 des inneren Rohres 13 die Strebe 6 fest.

Die Drehbewegung des äußeren Rohres 12 bzw. des inneren Rohres 13 um die Längsachse 11 erfolgt mittels eines Führungselementes 32, welches durch Kulissenschlitze 33 bzw. 34 des inneren Rohres 13 bzw. des äußeren Rohres 12 fährt. Hierzu wird das Führungselement 32, wie insbesondere in Figur 3 gezeigt, in einer oberen Führungsrinne 35 und einer unteren Führungsrinne 36 geführt. Die Führung erfolgt parallel zur Längsachse 11. Ferner ist dem Führungselement 32 beidseits eine Drehkappe 38 aufgesetzt, welche sich über Nadellager 39 gegen das Führungselement 32 abstützt. Bei Bewegung des Führungselementes 32 in Richtung x dreht sich die Drehkappe 38 an einer jeweiligen Kulissenwand 40 des inneren Rohres 13 bzw. Kulissenwand 41 des äußeren Rohres 12, so daß es infolge der Ausformung der Kulissenschlitze 33 und 34 zu einer Drehung des äußeren bzw. inneren Rohres 12 bzw. 13 um die Längsachse 11 kommt. Hierdurch werden die Streben 5 bzw. 6 entsprechend bewegt.

Um die Führung zu verbessern, sind die Kulissenwände, wie insbesondere in Figur 3 gezeigt, hochgezogen, so daß um die Kulissenschlitze eine kanalförmige Führungsrinne entsteht.

Die Bewegung des Führungselementes 32 in Richtung x geschieht in dem bevorzugten Ausführungsbeispiel durch einen vorzugsweise hydraulisch arbeitenden Hubzylinder 42, der bodenwärtig an den Deckel 22 angelenkt ist.

Er verläuft etwa parallel zur Längsachse 11. Dieser Hubzylinder 42 ist über eine Kolbenstange 43 mit einem Schubkolben 44 verbunden, welcher von dem bolzenförmigen Führungselement 32 durchsetzt ist. Hierbei verläuft die Mittelachse 45 des Führungselementes 32 etwa senkrecht zur Längsachse 11. Der Führung des Schubkolbens 44 innerhalb des inneren Rohres 13 dienen Gleitlager 46.

Durch die Halterung des Führungselementes 32 innerhalb des Schubkolbens 44 und durch die Führung des Führungselementes 32 innerhalb der Führungsrinne 35 wird ein allseitiges Kippen des Führungselementes 32 vermieden.

Im übrigen sei noch erwähnt, daß die Anschlußprofile 30 bzw. 31 selbstverständlich das Gehäuse 10 in jeweiligen Ausnehmungen 47 durchgreifen, um dort eine gelenkige Verbindung mit jeweils den Streben 5 bzw. 6 einzugehen.

In Figur 3 ist ferner erkennbar, daß das Gehäuse 10 aus einem Raum 48 für die Anordnung der Rohre 12 und 13 besteht und ferner hinter diesem Raum 48 eine weitere Kammer 49 vorgesehen ist, welche beispielsweise mit entsprechenden Hydraulikaggregaten für den Zylinder 42 belegt sein kann. Ferner sind dem Gehäuse 10 Schienenstreifen 50 angeformt, mit welchen das Gehäuse 10 an einem Anschlußwinkel 51 gehalten ist.

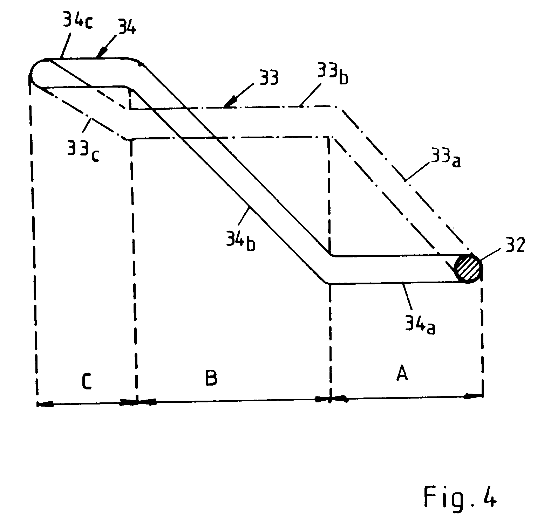

Im folgenden soll anhand der Figuren 1 und 4 der Bewegungsablauf näher erläutert werden:
In Schließlage der Ladebordwand 4 befindet sich das Führungselement 32 im rechten Teil der Kulissen, wie in Figur 4 dargestellt. Es durchsetzt sowohl die Kulisse 33 wie auch die Kulisse 34. Zum Öffnen der Ladebordwand 4 wird nun das Führungselement 32 nach links über den Hubzylinder 42 bzw. die Kolbenstange 43 in Bewegung versetzt. Dabei durchfährt es einen ersten parallel zur Längsachse 11 verlaufenden Kulissenteil 34a des Kulissenschlitzes 34 im äußeren Rohr 12. D. h., dieses äußere Rohr 12 bleibt ortsfest, so daß auch die mit ihm verbundene Strebe 5 nicht bewegt wird. Hierdurch wird erreicht, daß die Drehachse 7 fixiert bleibt und die Ladebordwand 4 um diese Drehachse 7 die Drehbewegung A vollführen kann.

Gleichzeitig durchfährt jedoch das Führungselement 32 auch einen Kulissenteil 33a des Kulissenschlitzes 33, der jedoch den Mantel des inneren Rohres 13 schräg zur Längsachse 11 verlaufend durchbricht. Hierdurch wird das innere Rohr 13 um die Längsachse 11 gedreht, wobei über die Anschlußprofile 31 die Strebe 6 mitgenommen wird. Diese Strebe 6 gelangt nun von der in Figur 1 dargestellten strichpunktierten Lage in eine mit durchgezogener Linie dargestellte Lage, an der sich auch die Bezugszahl 6 befindet. Ein entsprechender Anlenkpunkt 52 dieser Strebe 6 wird auf diese Weise in die mit 52a bezeichnete Lage verbracht, wobei die Ladebordwand 4 aufgeklappt ist.

Nunmehr tritt das Führungselement 32 in einen parallel zur Längsachse 11 angeordneten Kulissenschlitzbereich 33b ein, so daß ein weiteres Schwenken der Ladebordwand 4 nicht stattfindet.

Dagegen tritt das Führungselement 32 in dem Kulissenschlitz 34 in einen die Mantelfläche des äußeren Rohres 12 schräg zur Längsachse 11 durchbrechenden Schlitzteil 34b ein, so daß nunmehr eine Drehung des äußeren Rohres erfolgt. Diese Drehung geschieht um etwa 90°, wobei die Ladebordwand 4 auf die Entladefläche 8 abgesenkt wird. Die Strebe 5 gelangt dabei in die mit 5a gekennzeichnete strichpunktierte Lage, während die Strebe 6 in die mit 6a gekennzeichnete durchgezogene Lage verbracht wird. Infolge der parallelogrammartigen Führung der beiden Streben 5 und 6 verbleibt die Ladebordwand 4 in ihrer horizontalen Stellung.

Nunmehr erfolgt ein Übergang des Führungselementes 32 innerhalb der Kulissenschlitzes 34 in einen parallel zur Längsachse 11 verlaufenden Teil 34c, wobei eine weitere Drehung des äußeren Rohres vermieden wird. Dagegen durchläuft das Führungselement 32 einen wiederum schräg in der Mantelfläche des inneren Rohres 13 verlaufenden Bereich 33b des Kulissenschlitzes 33, so daß die Strebe 6a noch etwas weiter bewegt wird. Dies ist wiederum strichpunktiert bei 6b angedeutet. Der Anlenkpunkt 52b wird zu 52c verlagert, wobei jedoch die Drehachse 7 ortsfest verbleibt. Hierdurch erfolgt ein Schwenken der Ladebordwand 4 in Richtung C.

Im vorliegenden Ausführungsbeispiel ist der Strebe 5 noch eine weitere Stützstrebe 53 zugeordnet, welche einerseits ihren Anlenkpunkt gemeinsam mit der Strebe 5 in der Drehachse 7 besitzt. Andererseits allerdings ist um 180° gegenüberliegend an dem äußeren Rohr ein weiteres Anschlußprofil 30a vorgesehen, so daß diese Stützstrebe 53 die gleichen Bewegungen vollführt, wie die Strebe 5.

Zum Öffnen bzw. Absenken der Ladebordwand 4 ist keine große Hubkraft erforderlich, da allein das Gewicht der Ladebordwand 4 ein Folgen des Führungselementes 32 entlang den Kulissenschlitzen 33 und 34 bewirkt. Aus diesem Grunde ist auch keine besondere Drucklagerung des äußeren Rohres 12 bzw. inneren Rohres 13 gegenüber dem linksseitigen Deckel 24 bzw. Gehäusering 29 notwendig.

Anders verhält sich dies jedoch beim Anheben der Ladebordwand 4, auf der sich ggfs. noch entsprechende Lasten befinden. Hier wirken auf das Führungselement 32 über die Kulissenwände 40 bzw. 41 erhebliche Seitenkräfte und ferner auf die Rohre 12 bzw. 13 erhebliche Druckkräfte in Richtung x. Aus diesem Grunde ist es notwendig, im rechten Teil des Antriebs 3 entsprechende Drucklager 21 und 25 vorzusehen, welche diese Druckkräfte aufnehmen können.

## Patentansprüche

1. Vorrichtung zum Bewegen einer Ladebordwand (4) od. dgl. schwenkbaren Körper an beispielsweise einer Ladeplattform (1) eines Fahrzeuges, wobei die Ladebordwand (4) mit einem Antrieb (3) über Streben (5, 6) verbunden ist, welche einerseits getrennte Anlenkpunkte (7, 52) mit der Ladebordwand (4) aufweisen und andererseits mit um eine Längsachse (11) drehenden Anschlußprofilen (30, 31) des Antriebes (3) verbunden sind,
dadurch gekennzeichnet,
daß die Anschlußprofile (30) für die einen Streben (5) mit einem äußeren Rohr (12) und die Anschlußprofile (31) für die anderen Streben (6) mit einem inneren Rohr (13) verbunden sind, wobei beide Rohre (12, 13) ineinander um eine Längsachse (11) drehen.

2. Vorrichtung nach Anspruch 1, dadurch gekennzeichnet, daß den Rohren (12, 13) ein Antriebsorgan (42, 43) so zugeordnet ist, daß eine Drehung des einen Rohres (12 bzw. 13) und damit eine Tätigkeit der einen Strebe (5, 6) dann erfolgt, wenn das jeweils andere Rohr (13 bzw. 12) stillsteht.

3. Vorrichtung nach Anspruch 1 oder 2, dadurch gekennzeichnet, daß zum Drehen der Rohre (12, 13) diese Kulissenschlitze (33, 34) aufweisen, welcher von einem Führungselement (32) durchsetzt sind.

4. Vorrichtung nach Anspruch 3, dadurch gekennzeichnet, daß das Führungselement (32) aus einem bolzenförmigen Gleitkörper besteht, welcher von der Kolbenstange (43) eines Hubzylinders (42) angegriffen ist.

5. Vorrichtung nach Anspruch 4, dadurch gekennzeichnet, daß Kolbenstange (43) und Hubzylinder (42) entlang der Längsachse (11) innerhalb des inneren Rohres (13) angeordnet sind.

6. Vorrichtung nach Anspruch 4 oder 5, dadurch gekennzeichnet, daß das Führungselement (32) nach dem Durchsetzen der Kulissenschlitze (33, 34) in einer oberen und unteren Führungsrinne (35, 36) geführt ist, welche parallel zur Längsachse (11) verlaufen.

7. Vorrichtung nach Anspruch 6, dadurch gekennzeichnet, daß dem bolzenförmigen Führungselement (32) beidseits Drehklappen (38) aufgesetzt sind, welche sich zum Führungselement (32) hin über Lager (39) abstützen und mit ihrer Mantelfläche die Führungsrinnen (35, 36) und ggfs. Kulissenwände (40, 41) abrollen.

8. Vorrichtung nach wenigstens einem der Ansprüche 3 bis 7, dadurch gekennzeichnet, daß das Führungselement (32) mit einer Mittelachse (45) senkrecht zur Längsachse (11) einen Schubkolben (44) durchsetzt, der mit der Kolbenstange (43) verbunden ist.

9. Vorrichtung nach wenigstens einem der Ansprüche 3 bis 8, dadurch gekennzeichnet, daß der Kulissenschlitz (34) im äußeren Rohr (12) zuerst einen parallel zur Längsachse (11) verlaufenden Teil (34a), dann einen über die Mantelfläche des äußeren Rohres (12) schräg zur Längsachse (11) verlaufenden Teil (34b) und dann wieder einen parallel zur Längsachse (11) verlaufenden Teil (33b) aufweist.

10. Vorrichtung nach Anspruch 9, dadurch gekennzeichnet, daß der Kulissenschlitz (33) im inneren Rohr (13) zuerst einen schräg (33a), dann einen parallel (33b) und dann wiederum einen schräg (33c) verlaufenden Bereich aufweist.

11. Vorrichtung nach wenigstens einem der Ansprüche 1 bis 10, dadurch gekennzeichent, daß die Rohre (12, 13) zumindest einseitig (druckseitig) über Drucklager (21 bzw. 25) gegen das Gehäuse (10) des Antreibs (3) abgestützt sind.

12. Vorrichtung nach wenigstens einem der Ansprüche 3 bis 11, dadurch gekennzeichnet, daß zumindest der Bereich der Rohre (12, 13), welcher die Kulissenschlitze (33, 34) aufweist, aus Gußhalbschalen (14, 15) geformt ist.

13. Vorrichtung nach wenigstens einem der Ansprüche 1 bis 12, dadurch gekennzeichnet, daß noch eine weitere Stützstrebe (53) vorgesehen ist, welche einerseits mit dem Anlenkpunkt (7) und andernends mit dem Antrieb (3) verbunden ist.

14. Vorrichtung nach Anspruch 13, dadurch gekennzeichnet, daß sich das Anschlußprofil (30a) für die Stützstrebe (53) gegenüber dem Anschlußprofil (30) um 180° gedreht um die Längsachse befindet.

## Claims

1. Device for moving a loading tail-gate (4) or similar pivotal member on, for example, a loading platform (1) of a vehicle, the loading tail-gate (4) being connected to a drive (3) via struts (5, 6) which, on the one hand, have separate points of articulation (7, 52) to the loading tail-gate (4) and, on the other hand, are connected to attachment profiles (30, 31) of the drive (3) rotating round a longitudinal axis (11), characterised in that the attachment profiles (30) for one strut (5) are connected to an external tube (12) and the attachment profiles (31) for the other struts (6) are connected to an internal tube (13), the two tubes (12, 13) rotating in one another round a longitudinal axis (11).

2. Device according to claim 1, characterised in that the tubes (12, 13) are allocated a driving means (42, 43) in such a way that a rotation of one tube (12 or 13) and therefore activity of one strut (5, 6) takes place when the other respective tube (13 or 12) is at a standstill.

3. Device according to claim 1 or 2, characterised in that, for rotation of the tubes (12, 13), the tubes have slots (33, 34) which are penetrated by a guide element (32).

4. Device according to claim 3, characterised in that the guide element (32) consists of a bolt-shaped sliding member which is acted upon by the piston rod (43) of a lifting cylinder (42).

5. Device according to claim 4, characterised in that the piston rod (43) and the lifting cylinder (42) are arranged along the longitudinal axis (11) inside the internal tube (13).

6. Device according to claim 4 or 5, characterised in that the guide element (32) is guided, after penetration of the slots (33, 34), in an upper and lower guide channel (35, 36) extending parallel to the longitudinal axis (11).

7. Device according to claim 6, characterised in that rotating flaps (38) are placed on the bolt-shaped guide element (32) on both sides, the rotating flaps (38) being supported relative to the guide element (32) via bearings (39) and rolling on the guide channels (35, 36) and optionally walls (40, 41) with their external surface.

8. Device according to at least one of claims 3 to 7, characterised in that the guide element (32), with a centre line (45) perpendicular to the longitudinal axis (11), penetrates a sliding piston (44) which is connected to the piston rod (43).

9. Device according to at least one of claims 3 to 8, characterised in that the slot (34) in the external tube (12) firstly has a part (34a) extending parallel to the longitudinal axis (11), then a part (34b) extending over the external surface of the external tube (12) obliquely to the longitudinal axis (11) and then again a part (33b) extending parallel to the longitudinal axis (11).

10. Device according to claim 9, characterised in that the slot (33) in the internal tube (13) firstly has an obliquely extending region (33a), then a region extending in parallel (33b) and then again an obliquely extending region (33c).

11. Device according to at least one of claims 1 to 10, characterised in that the tubes (12, 13) are supported at least on one side (pressure side) via thrust bearings (21 or 25) against the casing (10) of the drive (3).

12. Device according to at least one of claims 3 to 11, characterised in that at least the region of the tubes (12, 13) having the slots (33, 34) is shaped from cast half shells (14, 15).

13. Device according to at least one of claims 1 to 12, characterised in that a further supporting strut (53) is also provided, the supporting strut (53) being connected on the one hand to the point of articulation (7) and at the other end to the drive (3).

14. Device according to claim 13, characterised in that the attachment profile (30a) for the supporting struts (53) is rotated through 180° round the longitudinal axis relative to the attachment profile (30).

## Revendications

1. Dispositif pour commander un hayon (4) ou organe basculant analogue par exemple sur un plateau (1) d'un véhicule, le hayon (4) étant relié à un moteur (3) par des branches (5, 6) ayant d'une part des points d'articulation (7, 52) séparés pour le hayon (4) et d'autre part des profilés de raccordement (30, 31) tournant autour d'un axe longitudinal (11) du moteur (3), caractérisé en ce que les profilés de raccordement (30) pour une branche (5) sont reliés à un tube extérieur (12) et les profilés de raccordement (31) de l'autre branche (6) sont reliés à un tube intérieur (13), les deux tubes (12, 13) tournant l'un dans l'autre autour de leur axe longitudinal (11).

2. Dispositif selon la revendication 1, caractérisé en ce qu'un organe d'entraînement (42, 43) est associé aux tubes (12, 13) de façon qu'une rotation de l'un des tubes (12 ou 13) et ainsi la commande d'une entretoise (5, 6) se produit lorsque l'autre tube respectif (13, 12) est à l'arrêt.

3. Dispositif selon la revendication 1 ou 2, caractérisé en ce que pour tourner les tubes (12, 13) ceux-ci comportent des fentes en forme de coulisses (33, 34) traversées par un élément de guidage (32).

4. Dispositif selon la revendication 3, caractérisé en ce que l'élément de guidage (32) se compose d'un coulisseau en forme de goujon commandé par la tige (43) du piston d'un vérin de levage (42).

5. Dispositif selon la revendication 4, caractérisé en ce que la tige de piston (43) et le vérin de levage (42) sont alignés sur l'axe longitudinal (11) à l'intérieur du tube intérieur (13).

6. Dispositif selon la revendication 4 ou 5, caractérisé en ce que l'élément de guidage (32), après avoir traversé les fentes en forme de coulisses (33, 34) est guidé dans une goulotte de guidage supérieure et inférieure (35, 36) qui sont parallèles à l'axe longitudinal (11).

7. Dispositif selon la revendication 6, caractérisé en ce que l'élément de guidage (32) en forme de goujon porte de part et d'autre des pattes de rotation (38) qui s'appuient sur l'élément de guidage (32) par l'intermédiaire de paliers (39) et dont les surfaces extérieures roulent dans les goulottes de guidage (35, 36) et le cas échéant dans les parois (40, 41) des coulisses.

8. Dispositif selon au moins l'une des revendications 3 à 7, caractérisé en ce que l'élément de guidage (32) traverse un piston de poussée (44), son axe (45) étant perpendiculaire à l'axe longitudinal (11) et ce piston est relié à la tige de piston (43).

9. Dispositif selon au moins l'une des revendications 3 à 8, caractérisé en ce que la fente formant coulisse (34) du tube extérieur (12) comprend tout d'abord une partie (34a) parallèle à l'axe longitudinal (11) puis une partie (34b) inclinée dans la surface enveloppe du tube extérieur (12), par rapport à l'axe longitudinal (11) puis de nouveau une partie (33b) parallèle à l'axe longitudinal (11).

10. Dispositif selon la revendication 9, caractérisé en ce que la fente formant coulisse (33) est présente dans le tube intérieur (13), tout d'abord une zone inclinée (33a) puis une zone (33b) parallèle puis de nouveau une zone inclinée (33c).

11. Dispositif selon au moins l'une des revendications, caractérisé en ce que les tubes (12, 13) s'appuient au moins d'un côté (du côté de la pression) par des paliers de pression (21 à 25) contre le boîtier (10) du moteur (3).

12. Dispositif selon au moins l'une des revendications 3 à 11, caractérisé en ce qu'au moins la zone des tubes (12, 13) présentant les fentes formant coulisses (33, 34) est constituée par des demi-coquilles coulées (14, 15).

13. Dispositif selon au moins l'une des revendications 1 à 12, caractérisé par une autre branche d'appui (53) reliée d'une part à un point d'articulation (7) et d'autre part au moteur (3).

14. Dispositif selon la revendication 13, caractérisé en ce que le profil de raccordement (30a) de la branche d'appui (53) est tourné de 180° autour de l'axe longitudinal par rapport au profilé de raccordement (30).
